# EUROPÄISCHE PATENTSCHRIFT

(11) **EP 1 879 009 B1**
(45) Veröffentlichungstag und Bekanntmachung des Hinweises auf die Patenterteilung: **09.03.2016**
(21) Anmeldenummer: 07012441.7
(22) Anmeldetag: 26.06.2007
(51) Int. Cl.: G01M 11/00, G01D 5/353

(54) **Spektrumanalyse externer optischer Modulatoren**
Spectrum analysis of external optical modulators
Analyse de spectre de modulateurs optiques externes

(30) Priorität: 13.07.2006 DE 102006032463
(43) Veröffentlichungstag der Anmeldung: 16.01.2008
(73) Patentinhaber: Deutsche Telekom AG, 53113 Bonn (DE)
(72) Erfinder: Lauterbach, Kai-Uwe, 04275 Leizig (DE); Schneider, Thomas, 14552 Wilhelmhorst (DE)
(74) Vertreter: Braun-Dullaeus, Karl-Ulrich

(56) Entgegenhaltungen:
- EP-A- 1 562 028
- EP-A1- 1 199 549
- JP-A- 2000 180 265
- US-A1- 2002 196 444
- US-A1- 2003 007 142
- US-A1- 2003 174 924

## Beschreibung

Die Erfindung betrifft ein Verfahren zur Analyse des Modulationsspektrums eines insbesondere in der optischen Nachrichtentechnik einzusetzenden Modulators (Probemodulator), mit dem Signale auf eine im optischen Bereich liegende Trägerfrequenz moduliert werden. Die Erfindung betrifft zudem ein System zur Umsetzung des Verfahrens.

Das Wissen um die Charakteristik des Modulators, also um die Frequenz- und Intensitätsverteilung in seinem Modulationsspektrum, ist für die Gewährleistung einer zuverlässigen Datenübertragung mit hoher Übertragungsrate besonders wichtig. Das gilt insbesondere, da bei der digitalen Datenübertragung die maximal mögliche Übertragungsleistung durch die nichtlinearen optischen Eigenschaften der Glasfaser, die zur Übertragung der optischen Signale dient, begrenzt werden. Diese Nichtlinearitäten spielen bei kleinen Intensitäten kaum eine Rolle, kommen aber zum tragen, sobald die Leistung einzelner Frequenzen des optischen Modulationsspektrum einen Schwellwert überschreiten.

Als besonders relevantes nichtlineares Phänomenen kommt dabei die Brillouin-Streuung wegen ihres geringen Schwellwertes in Betracht. So genügen wenige Milliwatt optischer Leistung, um Brillouin-Streuung in optischen Fasern anzuregen. Darüber hinaus haben Anteile des Spektrums mit besonders starkem Gradienten einen großen Einfluss auf die Selbst- und Kreuzphasenmodulation in der Faser.

Um den durch die Nichtlinearitäten der Glasfaser erzeugten Verlust kontrollieren und vermeiden zu können, ist es somit von großer Bedeutung, das optische Spektrum des Modulator-Signals mit seiner individuellen Intensitätsverteilung zu kennen, da durch die Intensitätsverteilung die maximale Intensität der in eine Glasfaser einkoppelbaren Leistung festgelegt ist.

Mit dem Modulator, nachfolgend "Probemodulator", werden digitalen Signale entsprechend der zu übertragenden Information auf die Grundfrequenz eines Laserstrahles moduliert. Da solche externen Modulatoren für die Übertragung mit besonders hohen Datenraten verwendet werden, ist die Intensitätsverteilung der von ihnen generierten Signale von besonderem Interesse. Schließlich hat sich herausgestellt, dass die vom Hersteller der Probemodulatoren mitgelieferten Angaben betreffend die Intensitätsverteilung der generierten Seitenbänder mitunter nicht zutreffen.

Zur Messung solcher Intensitätsverteilungen sind verschiedene Verfahren bekannt: So kann das Spektrum optischer Signale in der Nachrichtentechnik mit Hilfe von optischen Spektrumanalysatoren ("OSA") gemessen werden. Eine entsprechende Anordnung ist dem Grunde nach aus der US 2002 / 01965444 A1 bekannt. Moderne OSA haben eine Auflösebandbreite von 0,06 nm. Bei der Wellenlänge des Trägers von 1550 nm, die in der Nachrichtentechnik meist verwendet wird, entspricht das einer Auflösegenauigkeit im Bereich von 7,5 GHz. Spektrale Anteile unterhalb dieser Auflösegenauigkeit können mit einem OSA nicht aufgelöst und dargestellt werden.

Zudem ist die sogenannte "heterodyne Messmethode" bekannt. Allerdings treten bei der Spektrumanalyse nach dieser Messmethode bei modulierten optischen Signalen Kreuz- und Phasenprodukte auf, die das Messergebnis verfälschen und nachträglich nicht eliminiert werden können. Zudem ist diese Messmethode technisch besonders aufwendig, da eine schnelle Photodiode und ein elektrischer Spektrumanalysator benötigt wird.

Um mögliche Kreuz- und Phasenprodukte der heterodynen Messmethode zu vermeiden, sind zudem Verfahren zur Spektrumananlyse bekannt, die sich der stimulierten Brillouin Streuung (SBS) bedienen. Dabei wird ein kommerziell erhältlicher und in seiner Frequenz verstimmbarer Halbleiterlaser als Pumplaser genutzt, wobei solche Laser in der Anschaffung jedoch recht kostenintensiv sind. Es sind ähnlich arbeitende Systeme bekannt, die als Pumplaser einen in Frequenz und Amplitude stabilen Faserlaser bei einer Wellenlänge von 1550 nm nutzen. Die notwendige Frequenzverstimmung wird dann mit einem Modulator und einem Hochfrequenzgenerator durchgeführt. Dieses Verfahren ist zwar dem oben genannten Messverfahren hinsichtlich der Frequenzstabilität weit überlegen, jedoch ist der Bereich der Frequenzverstimmung mit wenigen Nanometern bei 1550 nm verhältnismäßig gering. Zudem wird auch bei diesem Verfahren ein kostenintensiver stabiler Pumplaser bei der zu messenden Wellenlänge benötigt.

Bei beiden Messverfahren wird das zu untersuchende Laserspektrum mit einem Referenzlaser abgetastet. Das Problem beider Messverfahren sind die relativen Frequenzschwankungen der Lasersignale zueinander. Sind diese zeitlich nicht konstant, kommt es unweigerlich zu Messfehlern im Spektrum.

Die US 2003/0007142 A1 offenbart ein Verfahren zum Messen der Charakterisitk einer optischen Faser. Eine Lichtquelle erzeugt Laserstrahlen, die über einen Lichtmodulator moduliert werden. Ein Pulsmodulator erzeugt eine Pumpstrahlung, die von der entgegengesetzten Seite auf Laserstrahlen treffen. Die austretenden Laserstrahlen werden dann ausgewertet.

Die US 2003/0174924 A1 beschreibt die Verwendung einer Analysemthode für das Spektrum der Brillouinstreuung, um die Beanspruchung, Dislokation, Temperatur und andere physikalisch Größen an irgendeiner Stelle einer optischen Faser zu messen, die an einer Struktur angebunden ist.

Die EP 1 562 028 A1 offenbart eine Vorrichtung zur Analyse von optischen Spektren mittels optischer Verstärkung durch brillouin- Streuung. Diese umfasst eine kohärente, optische, abstimmbare und schmalbandige Quelle, eine einmodige optische Faserstrecke, einen optischen Zirkulator, einen zweiten optischen Zugriff am anderen Ende der Faserstrecke, ein Erfassungssystem für direktes Licht und ein Kontrollsystem, welches eine Wellenlängenabtastung der optischen Quelle durchführt. Die beiden von den entgegengesetzten Seiten an die Faser eingeführten Strahlungen interagieren innerhalb der Faser entsprechend den Brillouin-Effekt.

Die JP 2000-180265 offenbart eine Messmethode zum Messen der Brillouin-Streuung, die weitgehend der Anordnung nach der US 2003/0007142 A1 entspricht.

Die EP 1199549 A1 betrifft ein Verfahren und eine Vorrichtung zur hochauflösenden Spektroskopie unter Verwendung von stimmulierter Brillouin-Streuung. Um einen Sprektralanteil aus einem optischen Signal selektiv auszukoppeln, wird Anregungslicht bestimmter Wellenlänge und das optische Signal in eine Lichtleitfaser eingekoppelt. Eine zugehörige Messvorrichtung umfasst eine Lichtleitfaser, in die das Anregungslicht und das optische Signal eingekoppelt werden, wobei das Anregungslicht eine solch hohe Intensität aufweist, dass innerhalb der Lichtleitfaser das Anregungslicht und das optische Signal selektiv rückgestreut werden. Ein Detektor registriert den rückgestreuten Lichtanteil.

Die Aufgabe der Erfindung ist es nunmehr, ein Verfahren zur Analys des Modulationsspektrums eines externen Modulators (Probemodulator) und eine Verwendung eines Systems zur Umsetzung des Verfahrens zu schaffen, das sich kostengünstig mit einfachen Mitteln umsetzen lässt und das bei einer hohen Auflösung und großer Genauigkeit robust und zuverlässig arbeitet.

Diese Aufgaben werden durch das Verfahren nach Anspruch 1 und die Verwendung des Systems nach Anspruch 4 gelöst. Vorteilhafte Ausgestaltungen sind in den jeweiligen Unteransprüchen genannt.

Der wesentliche Grundgedanke der Erfindung liegt darin, die Spektralverteilung der Probestrahlung, die durch die Modulation mit dem Probemodulator erzeugt wurde, mittels stimulierter Brillouin-Streuung (SBS) auszumessen und dabei auf eine aufwendige und nur bedingt kontrollierbare Messapparatur zu verzichten. Die SBS bietet sich zur Ausmessung der Modulationsspektren an, da sie besonders schmalbandig ist. Mit SBS kann ein Spektrum hochauflösend abgetastet werden. Der Probemodulator wird damit als durchstimmbare Pumpe eingesetzt, deren Bandbreite geringer ist, als die Bandbreite der SBS-Gewinnkurve in der verwendeten Faser.

Bei der SBS wird der größte Teil der Leistung einer starken durch einen Laser erzeugten Pumpwelle an eine sich in entgegengesetzter Richtung ausbreitende Stokes-Welle übertragen. Diese Stokes-Welle hat bei einer Pumpwellenlänge von 1550 nm in Standard Siglemode Glasfasern eine Frequenzverschiebung, die sogenannte Brillouin-Verschiebung, von etwa 11 GHz gegenüber der Pumpwelle. Die Bandbreite, in der SBS stattfindet, ist klein und beträgt für unmoduliertes Pumplicht rund 35 MHz. Besondere Glasfasern haben noch geringere Bandbreiten von etwa 11 MHz -14 MHz. Somit kann mit einer Pumpwelle eine gegenläufige, um 11 GHz im Frequenzbereich nach unten verschobene Signalwelle verstärkt werden.

Erfindungsgemäß wird die Einfachheit des Messaufbaus dadurch gewährleistet, dass zunächst ein Laserstrahl einer bestimmten Trägerfrequenz in zwei Strahlen, nämlich in einen Probestrahl und in einen Pumpstrahl, aufgeteilt wird. Nun wird mit dem zu untersuchenden Probemodulator ein Signal auf die Trägerfrequenz des Probestrahls moduliert, so dass neben der Trägerfrequenz zwei Seitenbänder entstehen. Mit einem einfachen Detektor, beispielsweise einer Photodiode, kann dann die Größe eines von der Intensität des Probenstrahls abgeleiteten Signals, insbesondere die Intensität des Probenstrahls, gemessen werden. Diese, nur von der Intensität des modulierten Probenstrahls abhängige Messgröße, bildet für die eigentliche Messung gewissermaßen ein Untergrundrauschen.

Nun wird der Pumpstrahl entgegen der Ausbreitungsrichtung des Probenstrahls in den Strahlengang eingekoppelt, wobei die Strahlführung vorteilhafterweise wie in der Nachrichtentechnik üblich, in Glasfasern stattfindet. Im Pumpstrahl befindet sich ein einstellbarer Modulator, der in seiner Frequenz durchgestimmt wird. Das Ausgangssignal des Detektors wird in Abhängigkeit der an diesem Modulator eingestellten Frequenz registriert. Bei bestimmten eingestellten Frequenzen des Modulators wird eine Zunahme der Intensität des Ausgangssignals des Detektors gemessen, wobei diese Peaks von der stimulierten Brillouin-Streuung herrühren. In Kenntnis der eingestellten Modulationsfrequenz der Pumpstrahlung kann dann auf das Modulationsspektrum des Probemodulators geschlossen werden.

Um ein möglichst reines Testsignal mit nur zwei schmalbandigen Frequenzpeaks zu erhalten, ist es vorteilhaft, am Ausgang des einstellbaren Modulators die Trägerfrequenz zu unterdrücken. Das ist bei den meisten Modulatoren durch Einstellung einer Gleichspannung an einem entsprechenden Eingang möglich.

Ein wesentlicher Vorteil der Erfindung liegt in der einfachen Realisierung, da alle benötigten Bauteile Standardprodukte der optischen Nachrichtentechnik sind, die in großer Stückzahl und damit preiswert hergestellt werden können. Ein solches System ist robust und praxistauglich und ermöglicht die Ausmessung eines externen Probemodulators mit großer Genauigkeit und bislang unerreicht hoher Auflösung. Schon an dieser Stelle sei darauf hingewiesen, dass der "optische Bereich" im Sinne der Erfindung nicht nur den Bereich des sichtbaren Lichtes ist, sondern darüber hinaus auch weit in die Bereiche des Infrarot und Ultraviolett hineinreicht.

Außerdem sei darauf hingewiesen, dass die Merkmale "Wellenlänge" und "Frequenz" gewissermaßen synonym verwendet werden, da beide Größen in definiertem Zusammenhang stehen. Ist die Wellenlänge λ im Vakuum bekannt, so lässt sich daraus die Frequenz f der Welle durch die einfache Beziehung f = c₀/λ ermitteln, wobei c₀ die Lichtgeschwindigkeit im Vakuum ist. Wird die Wellenlänge in einem Medium gemessen, gilt dieselbe Beziehung, jedoch muss in diesem Fall die Vakuum-Lichtgeschwindigkeit c₀ durch die Lichtgeschwindigkeit im Medium c ersetzt werden. Für den Zusammenhang zwischen diesen Werten gilt c = c₀ / n mit n als dem Brechungsindex des Materials.

Das erfindungsgemäße Verfahren zeichnet sich vor allem durch die geringe Auflösebandbreite, eine besonders hohe Frequenzstabilität und eine gute Messdynamik aus. Wie schon gesagt, ist der für die Umsetzung des Verfahrens nötige Aufbau vergleichsweise einfach und preiswert. Ein weiterer Vorteil ist, dass die bekannten Probleme der relativen Frequenzschwankungen vermieden werden, da nur ein Laser genutzt wird, der zum einen den notwendigen Träger für den zu untersuchenden externen Modulator und zum anderen die Pumpwelle als Referenzsignal erzeugt. Da im Vergleich zu den anderen bekannten Systemen keine stabile externe Quelle, kein Spektrumanalysator und keine schnelle Photodiode benötigt wird, ist das Verfahren bei hoher Auflösung, einem großen Dynamikbereich und hoher Geschwindigkeit besonders kostengünstig.

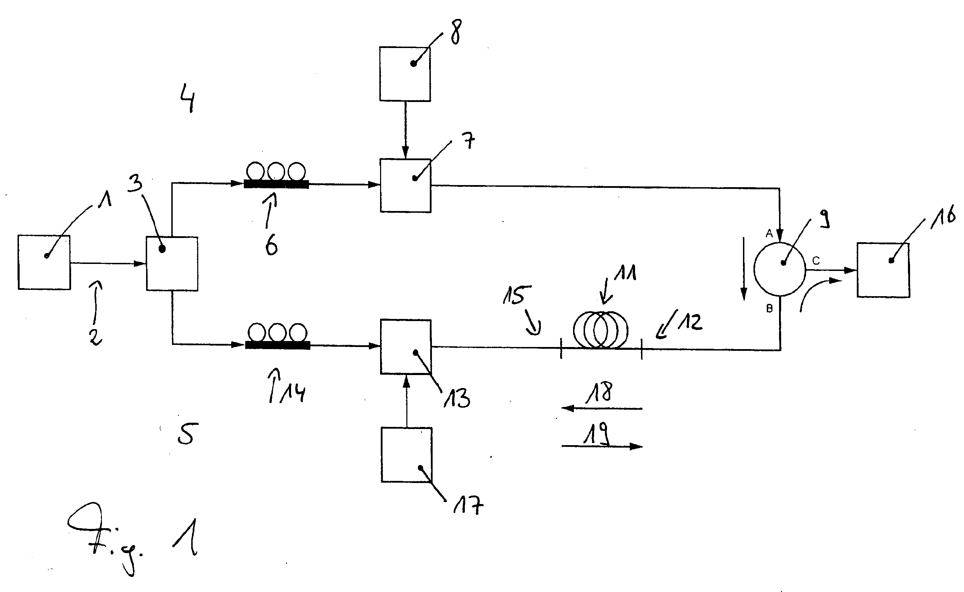

Die Erfindung wird anhand von Ausführungsbeispielen und anhand der Figuren 1 bis 3 näher erklärt. Es zeigen:
- **Figur 1**: den schematischen Aufbau eines efindungsgemäßen Systems,
- **Figur 2**: einen erweiterten Messaufbau und
- **Figur 3**: ein mit dem Messaufbau aufgenommenes Spektrum.

Der kohärente Laser 1 emittiert Licht mit einer Wellenlänge, die in diesem Fall im C-Band der optischen Telekommunikation zwischen 1528.77 und 1560.61 nm liegt. Dieser Bereich ist bevorzugt, da dafür preiswerte optische Komponenten verfügbar sind und zudem ein großer Teil der optischen Kommunikation im C-Band stattfindet. Das kohärente Licht des Lasers 1 wird über eine Glasfaser 2 einem optischen Koppler 3 zugeführt und von diesem in zwei Strahlen gleicher Leistungen aufgeteilt. Die beiden Strahlen, der Probestrahl und der Pumpstrahl werden entsprechend in zwei Zweigen, dem Pumpzweig 4 und dem Probezweig 5, geführt.

Im Pumpzweig 4 wird das kohärente Licht zunächst auf einen Polarisationssteller 6 gegeben, der dem nachfolgenden einstellbaren Modulator 7 die für ihn geeignete Polarisation einstellt. Der einstellbare Modulator 7 kann von einem Mach-Zehnder Modulator realisiert sein, der von einem Generator 8 mit einer variablen Frequenz angesteuert wird. Die mittleren Frequenz des Generators 8 entspricht der Brillouin-Verschiebung der SBS. Der Modulator 8 erzeugt ein oberes Seitenband und ein unteres Seitenband im Abstand der Generatorfrequenz von der Trägerfrequenz des kohärenten Lichtes. Die Trägerfrequenz wird unterdrückt.

Über einen Zirkulator 9 wird die so erzeugte Pumpwelle von Tor A nach B in eine 50 km lange Single Mode Glasfaser 11, in der die SBS stattfindet, über deren Tor 12 eingekoppelt. Diese Pumpwelle erzeugt einen Brillouin-Gewinn der im Frequenzbereich um den Wert der Brillouin-Verschiebung nach unten, und damit im Wellenlängenbereich nach oben, verschoben ist.

Der Probezweig 5 dient zur Analyse des Frequenzspektrums des zu untersuchenden externen Probemodulators 13, der von einem Generator 17 mit dem auf die Trägerfrequenz zu modulierenden Signal versorgt wird. Dazu wird in den Probezweig 5 das kohärente Licht des Lasers auf den Polarisationssteller 14 gegeben, der wiederum die für den Probemodulator 13 benötigte Polarisation einstellt. Dem Polarisationssteller 14 ist der zu untersuchende externe Probemodulator 13 nachgeschaltet. Das Licht am Ausgang des Probemodulators 13 wird in das Tor 15 der Glasfaser eingekoppelt.

Am Tor C des Zirkulators 9 wird die Intensität des Lichts, welches aus der Glasfaser emittiert wird mittels einer Leistungsmessung ausgewertet. Diese Leistungsmessung kann mit Hilfe eines Leistungsmessers 16, aber auch mit einer Photodiode, einem Phototransistor oder einem anderen Instrument welches die Leistung bzw. Intensität des Lichts misst erfolgen.

Wird der Generator 8 auf den Wert der Brillouin-Verschiebung eingestellt, überlagern in der Glasfaser 11 die Pumpwelle 18 aus dem Probezweig 5 und der Brillouin-Gewinn und es kommt zu einer Verstärkung des Lasersignals im Probezweig 5. Die Verstärkung resultiert daraus, dass dem Träger die Stokes-Welle 19 überlagert wird. Dies bewirkt einen Anstieg der Intensität am Tor C des Zirkulators 9, die mit dem Leistungsmessgerät 16 ausgewertet wird. Ausgehend von der mittleren Frequenz des Generators 8 wird dessen Frequenz nach unten und oben im Frequenzbereich variiert und so das Frequenzspektrum des zu untersuchenden externen Probemodulators 13 aufgenommen.

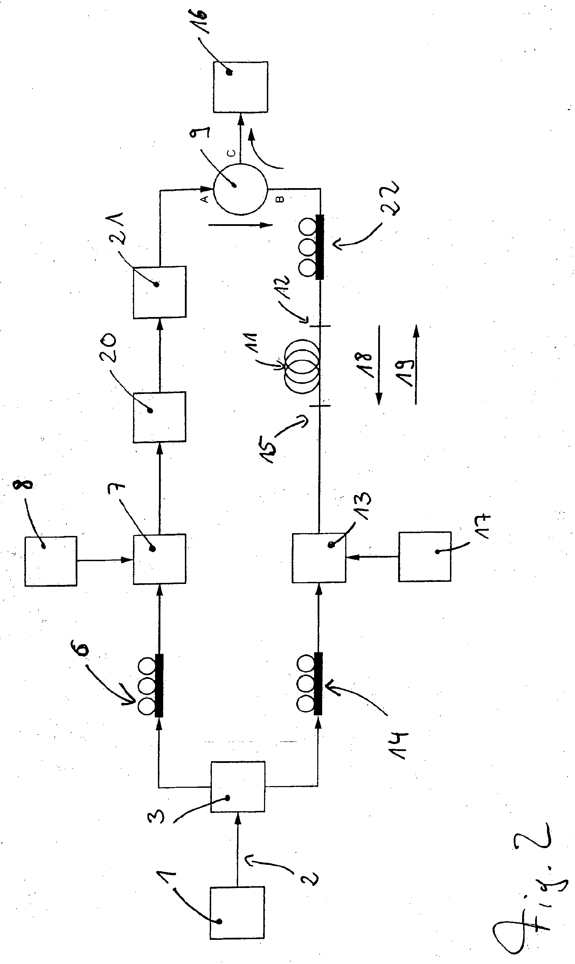

In Figur 2 ist ein erweiterter Messaufbau gezeigt. Neben den oben erwähnten Komponenten ist nunmehr zur Verbesserung der Messdynamik zwischen dem Ausgang des Modulators 7 und dem Tor A des Zirkulators ein Faser Bragg-Gitter 20 eingebaut. Dieses arbeitet als Bandpassfilter und wird so eingestellt, dass lediglich das erste obere Seitenband im Frequenzbereich (entspricht dem ersten unteren Seitenband im Wellenlängenbereich) durchgelassen wird. Die anderen Frequenzanteile im Spektrum werden mittels des Bragg-Gitters 20 unterdrückt. Die Filterbandbreite des Bragg-Gitters 20 entspricht der Frequenzvariation des Generators 8, wobei es auch möglich ist, ein in der Frequenz abstimmbares schmalbandiges Faser Bragg-Gitter zu nutzen, dessen Frequenzposition der Filterbandbreite der jeweiligen Frequenz des obere Seitenbandes entspricht.

Wenn die Leistung des Lichtes, die aus dem Laser 1 emittiert wird, zu gering ist, um SBS in der Glasfaser zu erzeugen, kann die Pumpleistung am Tor 12 der Glasfaser 11 durch einen Faserverstärker 21 erhöht, der dem Bragg-Gitter 20 nachgeschaltet wird und der die notwendige Pumpleistung erzeugt. Dieser Faserverstärker 21 erzeugt unabhängig von der Eingangsleistung eine konstante Ausgangsleistung.

Durch Einfügen eines weiteren Polarisationsstellers 22 zwischen Tor 12 der Glasfaser 11 und dem Tor B des Zirkulators wird ein weiterer Anstieg der Messdynamik erreicht. Wird der Koppler 3 am Ausgang des Lasers 1 durch einen variablen Koppler ersetzt, wird ebenfalls eine Optimierung der Messdynamik erzielt.

Nachfolgend wird die Funktionsweise der Erfindung noch einmal anhand eines Beispieles dargestellt:
In dem Beispiel wird der Probemodulator mit einem kontinuierlichen Sinussignal von 20 GHz gespeist, so dass die "Modulationsfrequenz" 20 GHz ist. Vereinfacht entsteht dadurch ein Spektrum, das eine untere Seitenfrequenz und eine obere Seitenfrequenz symmetrisch im Abstand von 20 GHz zum optischen Trägersignal bei 1550nm hat. Dieses im Probezweig erzeugte Signal wird durch die Glasfaser und den Zirkulator gedämpft und am Leistungsmessgerät gemessen. Da diese Leistung immer am Leistungsmessgerät ansteht, kann sie als Grundrauschen betrachtet werden.

Um diese Frequenzen des Probemodulators bei 20 GHz auszumessen, wird das Trägersignal im Pumpzweig mit dem einstellbaren Modulator zunächst mit einer Frequenz, die etwa der der Brioullin-Verschiebung von etwa 11 GHz entspricht, moduliert. Damit hat die Strahlung im Pumpzweig einerseits die Trägerfrequenz von 1550 nm und zwei um entsprechend 11 GHz nach oben und unten verschobene Seitenbänder. Wie oben dargelegt, wird die Trägerfrequenz unterdrückt, so dass nur die Seitenbänder vorhanden sind. Diese beiden "Test"-Frequenzen werden in den Probezweig eingekoppelt.

Von der aus dem Pumpzweig kommenden Strahlung mit den "Test"-Frequenzen, die gegenläufig in den Probezweig eingekoppelt werden, wird in der Glasfaser des Probezweiges Brillouin Streuung stimuliert. Diese streut entgegen der anregenden Pumpwelle und hat somit in der Glasfaser die Richtung der Probewelle. Dabei ist es vorteilhaft, wenn die Intensität der Pumpwelle zunächst so gering ist, dass der Schwellwert gerade nicht überschritten wird. Nur wenn sich die beiden Wellen bei der gleichen Frequenz/Wellenlänge treffen, kommt es zur Brillouin-Verstärkung in der Glasfaser.

Wenn die Testfrequenz genau auf die Brillouin Verschiebung bei etwa 11 GHz eingestellt wird, treffen sich die Brillouin verschobene Welle aus dem Pumpzweig mit der Trägerwelle (1550nm) aus dem Probezweig und verstärken sich, was im. Leistungsmessgerät nachweisbar ist. Nebenbei bietet sich damit eine einfache Methode, die Frequenz der Brillouin-Verschiebung und die Bandbreite der Brillouin-Verstärkung sehr genau auszumessen. Dazu wird durch Einstellung der Testfrequenz einfach das Trägersignal gesucht. Die Testfrequenz entspricht damit der Brillouin-Verschiebung. Wenn die Frequenz der Brillouin Verschiebung im einstellbaren Modulator gefunden ist, wird auf diese Frequenz auf Null normiert.

Wenn die Frequenz des einstellbaren Modulators ausgehend vom Nullpunkt um 20 GHz nach oben gedreht wird, geht zunächst die gemessene Intensität runter, da keine SBS mehr stattfindet. Die Intensität bleibt beim Grundrauschpegel bis sich die nächsten beiden Wellen bei gleicher Frequenz treffen. Das ist bei 31 GHz, also bei 11 GHz + 20 GHz, Differenz wieder ein verstärktes Signal, nämlich das obere Seitenband, zu messen.

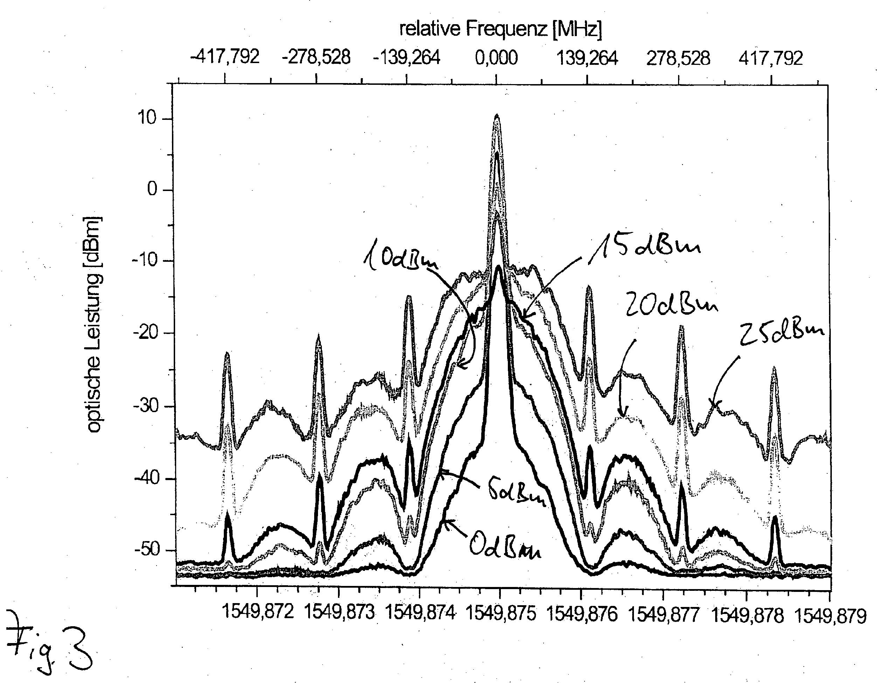

In Figur 3 sind 139 MBit/s phasenmodulierte PRBS Signale gezeigt, wobei PRBS "Pseudo Random Binary Signal" bedeutet und eine zufällige Folge digitaler 0 und 1 ist. Diese Signale wurden auf den zu untersuchenden externen optischen Modulator gegeben, der die Trägerfrequenz entsprechend moduliert. Die sechs verschiedenen Messkurven sind unterschiedliche elektrische Eingangsleistungen am elektrischen Eingang des externen optischen Modulators im logarithmischen Maßstab [dBm] von 0 dBm bis +25 dBm. Aufgetragen ist die optische Leistung des Signals gegen die Frequenz. In der Mitte ist der optische Träger zu erkennen. Die Seitenbänder liegen links und rechts davon.

An der Intensität in den Seitenbändern ist deutlich zu sehen, dass das optische Signal mit zunehmender Eingangsleistung immer besser ausmoduliert wird. Die in den Seitenbändern, beziehungsweise in den Nullstellen der Spaltfunktion, die sich aus einem PRBS Signal ergibt, auftretenden Peaks geben eine Aussage über den verwendeten Code des Signals. Es handelt sich um einen NRZ-Code (Never Return to Zero-Code), einen in der Nachrichtentechnik sehr gebräuchlichen Leitungscode. Andere Code-Verfahren für das PRBS Signal (zB.: RZ-, HDB-3-, CMI-Code) ergeben im Spektrum einen anderen Code-typischen spektralen Verlauf.

Zudem ist aus der Abbildung der Dynamikbereich, d.h. untere Messgrenze - in dem Bild -53 dBm - zur oberen Grenze - +10dBm zu erkennen. Insgesamt bietet das Verfahren eine Messdynamik von mindestens 63 dB. Die Auflösung der Messung entspricht etwa der des Brillouin-Gewinns, die hier bei ca. 22MHz liegt.

## Patentansprüche

1. Verfahren zur Analyse des Modulationsspektrums eines Probemodulators, der Licht einer im optischen Bereich liegenden Trägerfrequenz moduliert,
**dadurch gekennzeichnet,**
**dass** Laserlicht (2) einer Trägerfrequenz in zwei Strahlen, einen Probestrahl und einen Pumpstrahl, aufgeteilt wird,
**dass** mit dem zu untersuchenden Probemodulator (13) der Probestrahl moduliert wird,
**dass** die Intensität des Probenstrahls (5) mit einem Detektor (16) gemessen wird,
**dass** der Pumpstrahl (4) in den Strahlengang des Probenstrahls (5) mit einer Komponente entgegen dessen Ausbreitungsrichtung eingekoppelt wird,
**dass** ein im Pumpstrahl befindlicher Modulator (7) in seiner Frequenz durchgestimmt wird, wobei das Ausgangssignal des Detektors (16) in Abhängigkeit dieser Frequenz registriert wird,
**dass** aus Änderungen im Ausgangssignal des Detektors (16) auf das Modulationsspektrum des Probemodulators (13) geschlossen wird,
wobei mit dem im Pumpstrahl befindlichen Modulator (7) ein Seitenband auf die Trägerfrequenz des Pumpstrahls moduliert wird, das Brillouin-Streuung im Probestrahl (19) stimuliert, wobei der Brillouin-Gewinn im Detektor (16) als über dem Grundrauschen liegendes Signal registriert wird,
wobei die Frequenz des Modulators (7) im Frequenzbereich, in dem die stimulierte Brillouin-Streuung (SBS) erwartet wird, nach unten und oben variiert wird und
wobei das Modulationsspektrum des Probemodulators aufgenommen und so die Bandbreite der SBS-Gewinnkurve ausgemessen wird.

2. Verfahren nach Anspruch 1,
**dadurch gekennzeichnet,**
**dass** die Trägerfrequenz im Pumpstrahl unterdrückt wird.

3. Verfahren nach einem der vorherigen Ansprüche,
**dadurch gekennzeichnet,**
**dass** die Strahlen in massiven Wellenleitern, insbesondere in Glasfasern, geführt werden, wobei der Pumpstrahl in entgegengesetzter Richtung und damit in Rückwärtsrichtung in den Wellenleiter des Probestrahls eingekoppelt wird.

4. Verwendung eines Systems zur Umsetzung des Verfahrens nach einem der vorherigen Ansprüche aufweisend,
einen Laser (1) zur Erzeugung von kohärenter Laserstrahlung einer Trägerfrequenz,
einen erstes Mittel, insbesondere einen optischen Koppler (3), zur Aufteilung der Laserstrahlung in einen Probezweig (5) zur Führung eines Probestrahls und einen Pumpzweig (4) zur Führung eines und Pumpstrahls,
einen durchstimmbaren Modulator (7), insbesondere einen Mach-Zehnder Modulator, im Pumpzweig,
einen zweites Mittel, insbesondere einen Zirkulator (9), mit drei Toren (A,B,C) zur Vereinigung von Pumpzweig (4) und Probezweig (5), wobei der Pumpzweig (4) über Tor A und der Probezweig (5) über Tor B an das zweite Mittel (9) angeschlossen ist, wobei die Pumpstrahlung über das zweite Mittel (9) in entgegengesetzter Richtung zur Probestrahlung in den Probezweig eingekoppelt wird,
einen externen Probemodulator (13) im Probezweig (5),
eine an Tor C des Mittels (9) angeschlossene Leistungsmessung (16), wobei über Tor C der über Tor B in den Zirkulator (4) eintretende Probestrahl austritt.

5. Verwendung nach Anspruch 4,
**gekennzeichnet durch**
einen an den Modulator (7) angeschlossenen Generator (8) mit variabler Frequenz, wobei die mittlere Frequenz des Generators (8) der Brillouin-Verschiebung entspricht.

6. Verwendung nach Anspruch 4,
**gekennzeichnet durch**
einen an den externen Probemodulator (13) angeschlossenen Generator (17) zur Erzeugung des auf die Trägerfrequenz zu modulierenden Signals.

7. Verwendung nach Anspruch 4,
**dadurch gekennzeichnet,**
**dass** der Laser (1) eine Trägerfrequenz im C-Band der optischen Telekommunikation zwischen 1528.77 nm und 1560.61 nm hat.

8. Verwendung nach Anspruch 4,
**gekennzeichnet durch**
jeweils einen Polarisator (6,14), insbesondere einen Polarisationssteller, vor den Modulatoren (7,13).

9. Verwendung nach Anspruch 4,
**gekennzeichnet durch**
eine im Probezweig hinter dem Probemodulator angeordnete Standard Single Mode Glasfaser (11) einer Länge von größer 10km, insbesondere größer 40 km.

10. Verwendung nach Anspruch 4,
**dadurch gekennzeichnet,**
**dass** der Leistungsmesser (16) eine Photodiode oder ein Phototransistor ist.

11. Verwendung nach Anspruch 4,
**gekennzeichnet durch**
ein zwischen dem Ausgang des Modulators (7) und dem Tor A des Zirkulators (9) angeordnetes Faser Bragg-Gitter (20) und/oder einen Faserverstärker 21.

## Claims

1. A method for the analysis of the modulation spectrum of a sample modulator that modules light of a carrier frequency in the optical range,
**characterised in that**
laser light (2) of a carrier frequency is divided into two beams, one sample beam and one pump beam,
the sample beam is modulated with the sample modulator (13) to be tested,
the intensity of the sample beam (5) is measured with a detector (16),
the pump beam (4) is coupled into the beam path of the sample beam (5) with a component counter to the propagation direction thereof,
the frequency of a modulator (7) located in the pump beam is adjusted, the output signal of the detector (16) being recorded depending on said frequency,
the modulation spectrum of the sample modulator (13) is determined from changes in the output signal of the detector (16),
wherein the modulator (7) located in the pump beam is used to modulate a sideband, which stimulates Brillouin scattering in the sample beam (19), to the carrier frequency of the pump beam, the Brillouin gain being recorded in the detector (16) as a signal above the noise floor,
wherein the frequency of the modulator (7) is varied downwards and upwards within the frequency range in which the stimulated Brillouin scattering (SBS) is expected, and
wherein the modulation spectrum of the sample modulator is received and thus the bandwidth of the SBS gain curve is measured.

2. The method according to Claim 1, **characterised in that** the carrier frequency in the pump beam is suppressed.

3. Method according to any one of the preceding claims, **characterised in that** the beams are guided in solid waveguides, in particular in glass fibres, the pump beam being coupled into the waveguide of the sample beam in the opposite direction and thus in the reverse direction.

4. A use of a system to implement the method according to any one of the preceding claims, having
a laser (1) for generating coherent laser radiation of a carrier frequency,
a first means, in particular an optical coupler (3), for dividing the laser radiation into a sample branch (5) for guiding a sample beam and a pump branch (4) for guiding a pump beam,
an adjustable modulator (7), in particular a Mach-Zehnder modulator, in the pump branch,
a second means, in particular a circulator (9), having three gates (A, B, C) for combining pump branch (4) and sample branch (5), the pump branch (4) being connected via gate A and the sample branch (5) being connected via gate B to the second means (9), the pump radiation being coupled into the sample branch via the second means (9) in the opposite direction to the sample radiation,
an external sample modulator (13) in the sample branch (5),
a power measurement means (16), which is connected at gate C of the means (9), the sample beam that enters the circulator (4) via gate B exiting via gate C.

5. The use according to Claim 4, **characterised by** a generator (8), which is connected to the modulator (7) and has a variable frequency, the average frequency of the generator (8) corresponding to the Brillouin shift.

6. The use according to Claim 4, **characterised by** a generator (17), which is connected to the external sample modulator (13), to generate the signal to be modulated to the carrier frequency.

7. The use according to Claim 4, **characterised in that** the laser (1) has a carrier frequency in the C band of optical telecommunications between 1528.77 nm and 1560.61 nm.

8. The use according to Claim 4, **characterised by** a polariser (6, 14), in particular a polarisation splitter, in front of each modulator (7, 13).

9. The use according to Claim 4, **characterised by** a standard single-mode glass fibre (11) of a length greater than 10 km, in particular greater than 40 km, arranged in the sample branch behind the sample modulator.

10. The use according to Claim 4, **characterised in that** the power measurement means (16) is a photodiode or a phototransistor.

11. The use according to Claim 4, **characterised by** a fibre Bragg grating (20) and/or a fibre reinforcer (21) arranged between the output of the modulator (7) and gate A of the circulator (9).

## Revendications

1. Procédé d'analyse du spectre de modulation d'un modulateur échantillon qui module la lumière d'une fréquence porteuse située dans la plage optique,
**caractérisé en ce que**
de la lumière laser (2) d'une fréquence porteuse est divisée en deux faisceaux, un faisceau échantillon et un faisceau de pompage,
que le faisceau échantillon est modulé avec le modulateur échantillon (13) à analyser,
que l'intensité du faisceau échantillon (5) est mesurée avec un détecteur (16),
que le faisceau de pompage (4) dans le trajet de faisceau du faisceau échantillon (5) est couplé à une composante dans le sens contraire de son sens d'élargissement,
qu'un modulateur (7) se trouvant dans le faisceau de pompage est réglé dans sa fréquence, sachant que le signal de départ du détecteur (16) est enregistré en fonction de cette fréquence,
que le spectre de modulation du modulateur échantillon (13) est conclu à partir de modifications dans le signal de départ du détecteur (16),
sachant que le modulateur (7) se trouvant dans le faisceau de pompe module une bande latérale à la fréquence porteuse du faisceau de pompage, la diffusion Brillouin est stimulée dans le faisceau échantillon (19), sachant que le gain Brillouin est enregistré dans le détecteur (16) en tant que signal placé au-dessus du bruit de fond,
sachant que la fréquence du modulateur (7) dans la plage de fréquences, dans laquelle la diffusion Brillouin stimulée (SBS) est attendue, varie vers le bas et vers le haut et
sachant que le spectre de modulation du modulateur échantillon est enregistré et la largeur de bande de la courbe de gain SBS est ainsi mesurée.

2. Procédé selon la revendication 1, **caractérisé en ce que** la fréquence porteuse est atténuée dans le faisceau de pompage.

3. Procédé selon l'une des revendications précédentes, **caractérisé en ce que** les faisceaux sont dirigés dans des guides d'ondes massifs, en particulier dans des fibres optiques, sachant que le faisceau de pompage est couplé dans le sens inverse et ainsi dans le sens arrière dans le guide d'ondes du faisceau d'échantillon.

4. Emploi d'un système pour convertir le procédé selon l'une des revendications précédentes, présentant,
un laser (1) pour produire un faisceau laser cohérent d'une fréquence porteuse,
un premier moyen, en particulier un coupleur optique (3), pour diviser le faisceau laser en une branche échantillon (5) pour guider un faisceau échantillon, et une branche de pompage (4) pour guider un faisceau de pompage,
un modulateur (7), en particulier un modulateur Mach-Zehnder, pouvant être réglé, dans la branche de pompage,
un second moyen, en particulier un circulateur (9), comprenant trois portes (A, B, C) pour réunir la branche de pompage (4) et la branche échantillon (5), sachant que la branche de pompage (4) est reliée au second moyen (9) par la porte A et la branche échantillon (5) par la porte B, sachant que le faisceau de pompage est couplé dans la branche échantillon par le second moyen (9) dans le sens contraire au faisceau échantillon,
un modulateur échantillon externe (13) dans la branche échantillon (5),
une mesure de puissance (16) reliée à la porte C du moyen (9),
sachant que le faisceau échantillon dans le circulateur (4) entrant par la porte B sort par la porte C.

5. Emploi selon la revendication 4, **caractérisé par** un générateur (8) à fréquence variable relié au modulateur (7), sachant que la fréquence moyenne du générateur (8) correspond au déplacement Brillouin.

6. Emploi selon la revendication 4, **caractérisé par** un générateur (17) relié au modulateur échantillon externe (13) pour produire le signal à moduler à la fréquence porteuse.

7. Emploi selon la revendication 4, **caractérisé en ce que** le laser (1) a une fréquence porteuse entre 1528.77 nm et 1560.61 nm dans la bande C de la télécommunication optique.

8. Emploi selon la revendication 4, **caractérisé par** un polarisateur respectif (6, 14), en particulier un réglage de polarisation avant les modulateurs (7, 13).

9. Emploi selon la revendication 4, **caractérisé par** une fibre optique (11) Standard Single Mode disposée derrière le modulateur échantillon dans la branche échantillon, d'une longueur supérieure à 10 km, en particulier supérieure à 40 km.

10. Emploi selon la revendication 4, **caractérisé en ce que** le mesureur de puissance (16) est une photodiode ou un phototransistor.

11. Emploi selon la revendication 4, **caractérisé par** un réseau de fibres Bragg (20) et/ou un amplificateur de fibres (21) disposé(s) entre la sortie du modulateur (7) et la porte A du circulateur (9).
